# EUROPÄISCHE PATENTSCHRIFT

(11) **EP 2 897 080 B1**
(45) Veröffentlichungstag und Bekanntmachung des Hinweises auf die Patenterteilung: **20.06.2018**
(21) Anmeldenummer: 14183126.3
(22) Anmeldetag: 02.09.2014
(51) Int. Cl.: G06K 7/10

(54) **Verfahren und Lese-/Schreibvorrichtung zur Präsenzbestimmung einer Transpondereinheit**
Method and reader/writer for determining the presence of a transponder unit
Procédé et dispositif d'écriture/lecture destinés à déterminer la présence d'un transpondeur

(30) Priorität: 16.09.2013 DE 102013110187
(43) Veröffentlichungstag der Anmeldung: 22.07.2015
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE)
(74) Vertreter: Patentanwälte Thömen & Körner

(56) Entgegenhaltungen:
- DE-A1-102004 057 266
- US-A1- 2004 256 460

## Beschreibung

Die Erfindung betrifft ein Verfahren und eine Lese-/Schreibvorrichtung zur Präsenzbestimmung einer Transpondereinheit in einem elektromagnetischen Feld einer Lese-/Schreibvorrichtung nach dem Oberbegriff des Anspruchs 1.

RFID-Systeme (Radio Frequency Identification) zur Kommunikation einer Transpondereinheit mit einer Lese-/Schreibvorrichtung sind bereits bekannt und weit verbreitet. Solche Systeme nutzen eine elektromagnetische Kopplung zwischen einer Lese-/Schreibvorrichtung und einer Transpondereinheit, um Daten und gegebenenfalls Energie zwischen der Lese-/Schreibvorrichtung und der Transpondereinheit auszutauschen.

Dabei spielt die Entwicklung von netzunabhängigen Systemen, d.h. Lese-/Schreibvorrichtungen ohne externe Energieversorgung eine immer größere Rolle. Aus diesem Grund ist es Gegenstand der aktuellen Entwicklung stationäre und/oder mobile Lese-/Schreibvorrichtungen zu konstruieren, die einen möglichst geringen Stromverbrauch aufweisen und somit für den Batteriebetrieb geeignet sind.

Ein solches System mit dem zugrunde liegenden Verfahren ist in der WO 2005/086069 A2 beschrieben. Dieses Verfahren sieht vor, dass die Lese-/ Schreibvorrichtung periodisch oder kontinuierlich ein Detektionssignal aussendet und erst, wenn eine Transpondereinheit im elektromagnetischen Feld der Lese-/ Schreibvorrichtung detektiert wurde, ein Kommunikationssignal zur Identifikation und Kommunikation mit der Transpondereinheit aussendet.

Allerdings wird bei dem in der WO 2005/086069 A2 beschriebenen Verfahren das Detektionssignal mit voller Sendeleistung abgegeben und die Empfängereinheit ist während des Aussendens des Detektionssignals und dem Erfassen desselbigen kontinuierlich in Betrieb und verbraucht somit Strom. Zudem kann das beschriebene Verfahren lediglich für eine Detektions- und Kommunikationsfrequenz von 13,56 MHz eingesetzt werden. Die Ansprüche 1 und 2 sind gegenüber DE-A1-10 2004 057266 abgegrenzt. Der vorliegenden Erfindung liegt somit die Aufgabe zugrunde, die bisherigen Nachteile und Beschränkungen zu überwinden und ein Verfahren bereitzustellen, das frequenzunabhängig einsetzbar ist und das den Stromverbrauch einer Lese-/ Schreibvorrichtung, die mittels eines Radiosignals mit einer Transpondereinheit kommuniziert, minimiert. Die Erfindung ist Gegenstand der unabhängigen Ansprüche. Weiterbildungen und vorteilhafte Ausgestaltungen ergeben sich aus den abhängigen Ansprüchen.

Das analoge Summieren der nach Gleichrichtung erhaltenen Halbwellen der Schwingungen des Antennensignals sowie das Zwischenspeichern des summierten Wertes kann mit passiven Bauelementen durchgeführt werden, die ihre Betriebsenergie dem Antennensignal selbst entnehmen und keine zusätzliche Energie benötigen. Dadurch kann der Energieverbrauch im Detektionsmodus deutlich gegenüber dem Stand der Technik gesenkt werden, bei dem im Detektionsmodus die Lese/Schreibeinheit aktiviert ist.

Die erfindungsgemäße Lösung ist nicht auf einen speziellen Frequenzbereich beschränkt und kann somit insbesondere in Lese-/Schreibvorrichtungen für die gängigen RFID Frequenzen insbesondere 125 kHz oder 13,56 MHz eingesetzt werden.

Da die Auswertung des gespeicherten Wertes erst nach Abschalten des Detektionssignals erfolgt, wird der Energiebedarf während des gesamten Detektionszyklusses auf einem sehr niedrigen Niveau gehalten.

Das ermittelte Vergleichssignal wird über einen A/D-Wandler an eine Kontrolleinheit weitergeleitet und dort mit einem Referenzsignal verglichen.

Das Verfahren sieht vor, die Kontrolleinheit je nach Situation in verschiedene Betriebsmodi zu verbringen. So befindet sich die Kontrolleinheit einen Großteil der Zeit in einem Stand-by-Modus aus dem die Kontrolleinheit periodisch in einen Detektionsmodus verbracht wird. Falls sich keine Transpondereinheit im elektromagnetischen Feld der Lese-/Schreibvorrichtung befindet, wird die Kontrolleinheit zurück in den Stand-by-Modus verbracht. Andernfalls wird die Kontrolleinheit in einen Kommunikationsmodus verbracht, aus dem die Kontrolleinheit in den Stand-by-Modus zurück verbracht wird, sobald die Kommunikation abgeschlossen ist.

Es ist vorteilhaft, wenn die Kontrolleinheit erst in den Kommunikationsmodus verbracht wird, wenn ein Vergleichssignal um einen vorbestimmbaren Wert von einem Referenzsignal abweicht. Somit ist es möglich ein Verbringen der Kontrolleinheit in den Kommunikationsmodus, obwohl sich kein Transponder im elektromagnetischen Feld der Lese-/Schreibvorrichtung befindet, zu vermeiden.

Es ist für die Anwendung des Verfahrens zweckmäßig, wenn das Verbringen der Kontrolleinheit von dem Stand-by-Modus in den Detektionsmodus sich periodisch wiederholt, wobei die Periode einstellbar ist und insbesondere 250 ms betragen kann. Im Stand-by-Modus verbraucht die Lese-/Schreibvorrichtung am wenigsten Strom. Somit ist es vorteilhaft sie möglichst oft und/oder möglichst lange in diesem Modus verweilen zu lassen.

Es ist vorteilhaft, wenn das Referenzsignal automatisch neu kalibriert wird. Für eine automatische Kalibrierung des Referenzsignals kann das Vergleichssignal, welches an die Kontrolleinheit übermittelt wurde, herangezogen werden. Dabei kann die Kalibrierung des Referenzsignals auf dem letzten Vergleichssignal oder auf den letzten bis zu 100 Vergleichssignalen beruhen. Durch eine solche automatische Kalibrierung kann sich die Lese-/Schreibvorrichtung an eine mögliche Änderung der äußeren Bedingungen, die die Abstrahlcharakteristik der Lese-/Schreibvorrichtung verändern, anpassen.

Es ist zweckmäßig, wenn es sich bei dem Detektionssignal um einen einzigen Impuls von 2 µs länge handelt oder um mindestens zwei Impulse mit einer Frequenz von 125 kHz.

Hierzu ist es vorteilhaft, wenn das Detektionssignal direkt über den Timer-Ausgang der Kontrolleinheit erzeugt wird.

Vorzugsweise wird im LF-Frequenzbereich, in den 125 kHz fällt, unmittelbar nach Aussenden des Impulses und für einen Zeitraum, der gleich dem Zeitraum zum Aufsummieren des Vergleichssignal bis zu einem Maximalwert entspricht, die Lese-/Schreibvorrichtung vorübergehend in den Stand-By-Modus versetzt. Nach Ablauf dieses Zeitraums wird die Lese-/Schreibvorrichtung wieder in den Detektionsmodus versetzt und der Wert des Vergleichssignals verarbeitet. Nach dem Impuls wird der Schwingkreis der Antenne angeregt und baut dann eine Schwingung auf, die anschließend wieder abklingt. Die Demodulationseinheit summiert daher auch nach Ende des den Schwingkreis anregenden Impulses noch weitere Schwingungen auf bis ein Maximum der gleichgerichteten und aufsummierten Spitzenwerte der Schwingungen erreicht und dieser Wert zwischengespeichert wird. Der Zeitraum kann zuvor berechnet oder in Vorversuchen empirisch ermittelt werden. Da innerhalb dieses Zeitraums nur passive Bauelemente an der Detektion beteiligt sind, kann die Lese-/Schreibvorrichtung vorübergehend in den Stand-By-Modus geschaltet werden, und so der Energiebedarf nochmals gesenkt werden. Im Stand-By-Modus ist nämlich im Idealfall nur noch eine interne Uhr aktiv, die die Lese-/Schreibvorrichtung zu festgelegten Zeiten aus dem Stand-By-Modus wecken kann und im Stand-By-Modus nur extrem wenig Energie benötigt.

Weiter ist es kann zweckmäßig, wenn es sich bei dem Detektionssignal um wenigstens einen Burst handelt und der Burst 40-100 Impulse, bevorzugt 60-80 Impulse umfasst.

Es ist von Vorteil, wenn zur Erzeugung des Detektionssignals ein externer Oszillator eingesetzt wird, der ausschließlich diesem Zweck dient und besonders energiesparend ausgeführt wird..

Ferner ist es zweckmäßig, das Detektionssignal mit einer geringeren Leistung auszusenden, als das Kommunikationssignal. Dadurch kann der Stromverbrauch der Lese-/Schreibvorrichtung weiter verringert werden.

Vorzugsweise wird zur Aussendung des Detektionssignals ein hochohmiger Verstärker eingesetzt. Dadurch kann der Stromverbrauch im Detektionsmodus weiter verringert werden.

Vorzugsweise wird im HF-Frequenzbereich, in den 13,5 MHz fällt, zu Beginn des Detektionsmodus der externe Oszillator eingeschaltet, unmittelbar nach Einschalten des externen Oszillators und für einen Zeitraum, der gleich dem Zeitraum zum Einschwingen und Erreichen eines stationären Zustand der Schwingungsamplitude ist, die Lese-/Schreibvorrichtung vorübergehend in den Stand-By-Modus versetzt. Nach Ablauf dieses Zeitraums wird die Lese-/Schreibvorrichtung wieder in den Detektionsmodus versetzt, anschließend der Verstärker aktiviert und die Oszillatorschwingung für die Dauer des Burst auf die Antenne geschaltet und danach wieder von der Antenne getrennt und gleichzeitig wird der Verstärker und der Oszillator ausgeschaltet. Unmittelbar danach wird der Wert des Vergleichssignals verarbeitet.

Während des Burst bauen sich am Schwingkreis der Antenne Schwingungen mit zunehmender Amplitude auf, die anschließend wieder abklingen. Die Demodulationseinheit summiert während des Burst die Spannungsspitzen der gleichgerichteten Schwingungen auf, bis zum Ende des Burst ein Maximum erreicht und dieser Wert zwischengespeichert wird. Da innerhalb des Zeitraums des Burst nur der externe Oszillator und sonst nur passive Bauelemente an der Detektion beteiligt sind, kann die Lese-/Schreibvorrichtung vorübergehend in den Stand-By-Modus geschaltet werden, und so der Energiebedarf nochmals gesenkt werden. Im Stand-By-Modus ist nämlich im Idealfall nur noch eine interne Uhr aktiv, die die Lese-/Schreibvorrichtung zu festgelegten Zeiten aus dem Stand-By-Modus wecken kann und im Stand-By-Modus nur extrem wenig Energie benötigt.

Neben dem Verfahren umfasst die Erfindung eine Lese-/Schreiborrichtung zur Durchführung des erfindungsgemäßen Verfahrens

Dabei besteht die Demodulationseinheit aus einer Diode, einem Widerstand und einem Kondensator, wobei der Kondensator gleichzeitig ein Zwischenspeicher ist.

Im Folgenden wird die Erfindung anhand von Figuren und Beispielen weiter erläutert.
Fig. 1 zeigt eine schematische Darstellung des Verfahrens für den Einsatz in einem Lese-/Schreibvorrichtung mit einer Frequenz von 13,56 MHz des Detektions- und Kommunikationssignals.
Fig. 2 zeigt einen zeitlichen Verlauf der Antennenschwingung. Fig. 3 zeigt einen zeitlichen Verlauf der Kondensatorspannung im Hüllkurvendemodulator. Fig. 4 zeigt eine schematische Darstellung des Verfahrens für den Einsatz in einem Lese-/Schreibvorrichtung mit einer Frequenz von 125 kHz des Detektions- und Kommunikationssignals.

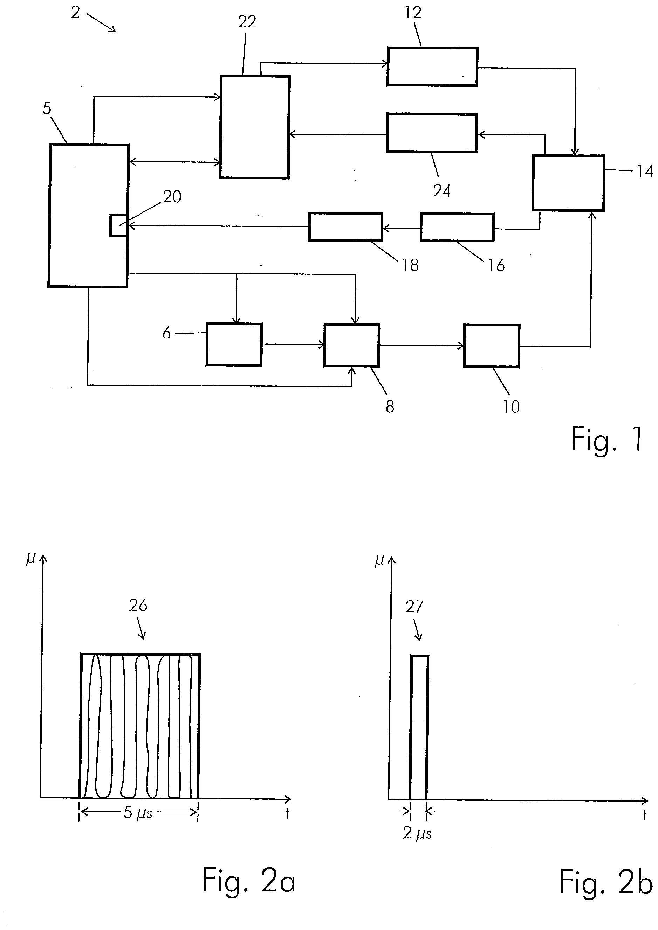

   In Figur 1 ist eine schematische Darstellung des Verfahrens für den Einsatz in einem Lese-/Schreibvorrichtung 2 mit einer Frequenz von 13,56 MHz des Detektions- und Kommunikationssignals dargestellt.
   Zu Beginn eines Detektionszyklusses befindet sich die Lese-/Schreibvorrichtung 2 in einem Stand-by-Modus in dem lediglich die Teile einer Kontrolleinheit 5 aktiv sind, die für die periodische Verbringung der Lese-/Schreibvorrichtung 2 in einen Detektionsmodus benötigt werden.
   Die periodische Verbringung in den Detektionsmodus der Lese-/Schreibvorrichtung 2 ist dabei individuell in der Kontrolleinheit 5 einstellbar. Eine vorteilhafte Ausgestaltung der Erfindung sieht einen Wechsel von Stand-by- in den Detektionsmodus alle 250 ms vor.

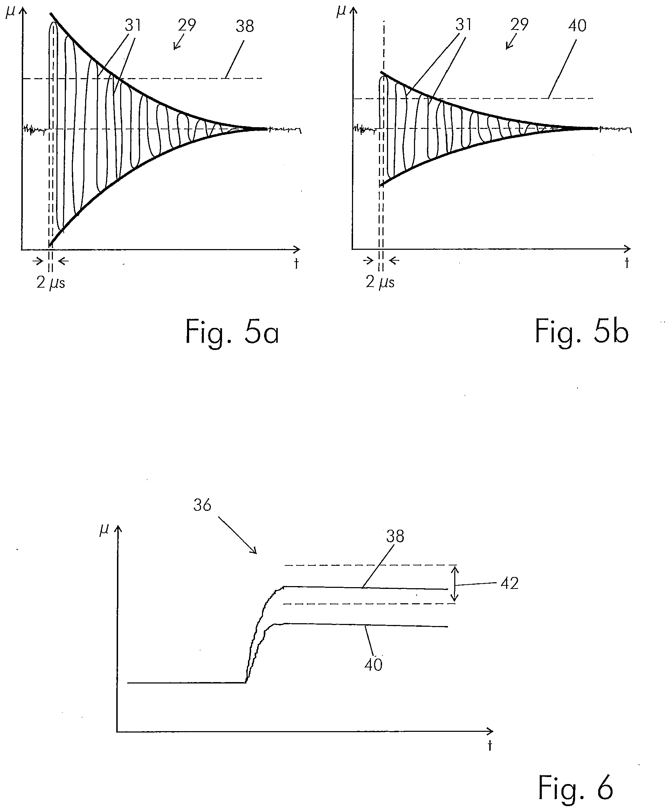

Fig. 5 einen zeitlichen Verlauf der Antennenschwingung ohne (Fig, 5a) und mit (Fig. 5b) Transpondereinheit im elektromagnetischen Feld für einen LF-Frequenzbereich.
Fig. 6 einen zeitlichen Verlauf der Kondensatorspannung im Hüllkurvendemodulator.

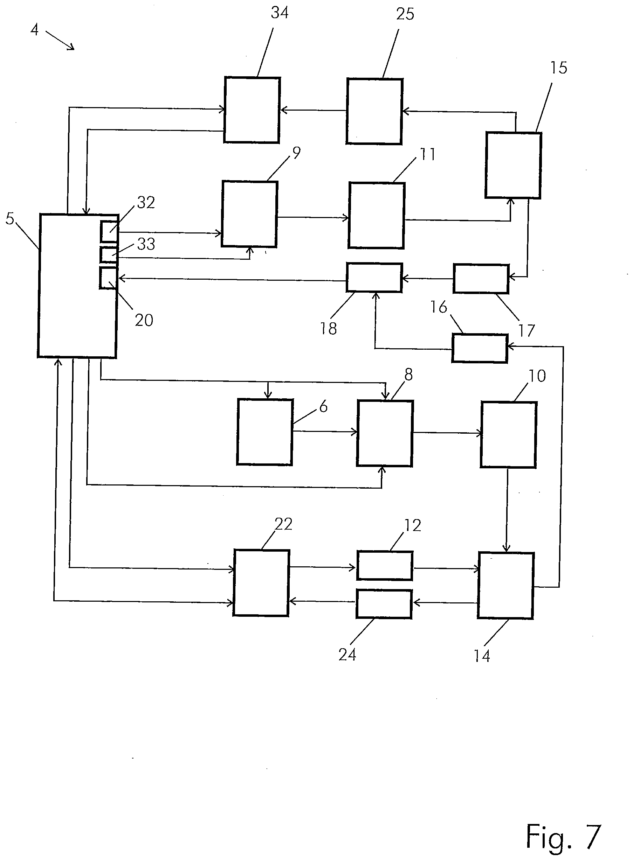

Fig.7 eine schematische Darstellung des Verfahrens für den Einsatz in einer Lese-/Schreibvorrichtung mit Frequenzen von 125 kHz und 13,56 MHz des Detektions- und Kommunikationssignals.

Im Detektionsmodus werden zunächst der Oszillator 6 und der Verstärker 8 durch die Kontrolleinheit 5 eingeschaltet und ein Detektionssignal über eine Anpassung 10 an eine Antenne 14 geleitet.

Das Antennensignal der Antenne 14 wird direkt abgegriffen und einer Demodulationseinheit 18 zugeführt. Die Demodulationseinheit 18 beinhaltet einen Hüllkurvendemodulator, der eine Diode, einen Widerstand und einen Kondensator umfasst. Das Antennensignal der Antenne 14 wird im Demodulator aufsummiert und der Wert kurzzeitig gespeichert.

Eine entsprechende Verarbeitung des Wertes beginnt erst dann, wenn das Detektionssignal bereits wieder abgeschaltet wurde. Dadurch wird das benötigte Energieniveau stets niedrig gehalten.

Das so gewonnene Vergleichssignal wird an einen A/D-Wandler 22 der Kontrolleinheit 5 weitergeleitet, in der das Vergleichssignal mit einem Referenzsignal verglichen wird. Stimmt das Vergleichssignal mit dem Referenzsignal bis auf eine definierbare Toleranzabweichung mit dem Referenzsignal überein, so befindet sich keine Transpondereinheit im elektromagnetischen Feld der Lese-/Schreibvorrichtung 2 und die Kontrolleinheit 5 wird in den Stand-by-Modus verbracht.

Sollte das Vergleichssignal jedoch außerhalb des Toleranzbereiches liegen, so wechselt die Kontrolleinheit 5 in einen Kommunikationsmodus, indem eine Transceivereinheit 24 eingeschaltet wird. Die Transceivereinheit 24 sendet daraufhin das Kommunikationssignal über eine Anpassung 10 an die Antenne 14, welche wiederum die Antwort der Transpondereinheit empfängt und über einen Filter 26 an die Transceivereinheit 24 leitet. Während der Kommunikation zwischen Kontrolleinheit 5 und Transpondereinheit werden, im für die Kommunikation benötigten Ausmaß, Daten zwischen Kontroll- 5 und Transceivereinheit 24 ausgetauscht.

Nach einer abgeschlossenen Kommunikation wird die Transceivereinheit 24 abgeschaltet und die Kontrolleinheit 5 wieder in den Stand-by-Modus verbracht, aus dem sie erneut periodisch in den Detektionsmodus verbracht wird.

In Figur 2 ist ein typischer zeitlicher Verlauf der Antennenschwingung 28 dargestellt. Aufgrund des ausgesandten Detektionssignals in Form eines 5 ps Bursts 30 wird die Antenne zu Schwingungen 28 angeregt und schwingt nach Abschalten des Detektionssignals 12 langsam aus. Das Antennensignal 16 wird an den Hüllkurvendemodulator weitergeleitet.

Befindet sich ein Transponder im elektromagnetischen Feld der Lese-/ Schreibvorrichtung 2, so wird die Antenne 14 bedämpft und die Amplitude der Antennenschwingungen 28 erreicht nicht die Werte wie im ungedämpften Fall, wenn sich kein Transponder im elektromagnetischen Feld der Lese-/Schreibvorrichtung 2 befindet.

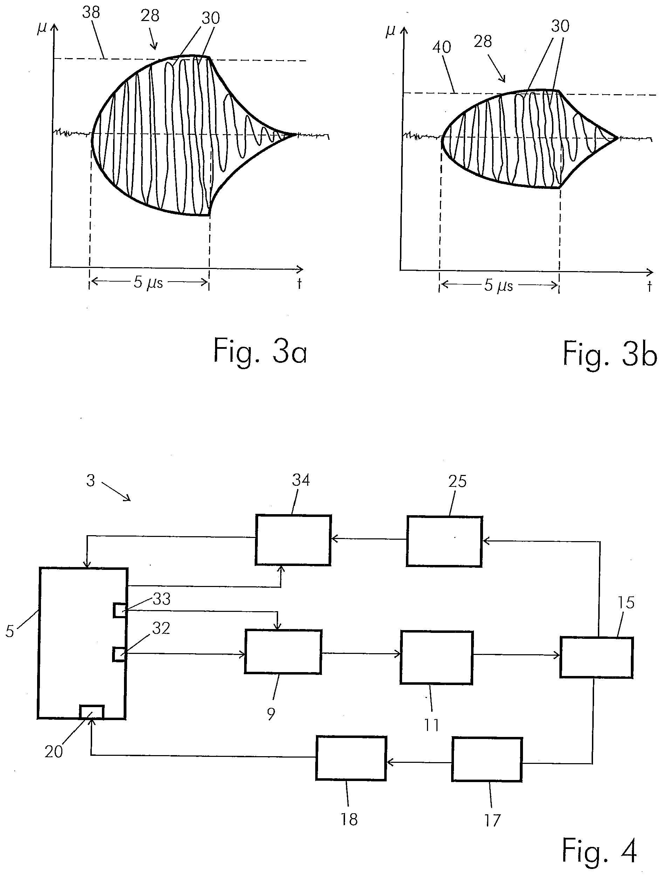

In Figur 3 ist eine typische Spannungskennlinie 32 eines Kondensators in einem Hüllkurvendemodulator dargestellt. Mit dem Beginn der Antennenschwingungen 28 am Hüllkurvendemodulator steigt die Spannung stetig an, bis sie ein Maximum erreicht, wenn das Detektionssignal abgeschaltet wird.

Bei den beiden Spannungskennlinien 32 handelt es sich zum einen um ein Referenzsignal 34 und zum andern um ein Vergleichssignal 20. Zudem ist der frei wählbare Toleranzbereich 36 dargestellt und die Tatsache, dass die Abweichung des Vergleichssignals 20 außerhalb des Toleranzbereichs 36 des Referenzsignals 34 liegt und somit der Vergleich der Signale zu einer Verbringung der Kontrolleinheit in den Kommunikationsmodus führt.

Zudem ist es möglich, dass sich das Referenzsignal 34 und der Toleranzbereich 36 automatisch und/oder manuell anpassen lassen. Die Anpassung ist dabei abhängig von den Umgebungsparametern der Lese-/Schreibvorrichtung und/oder der Anzahl erfolgreicher und nicht erfolgreicher Kommunikationen mit einer Transpondereinheit.

Eine vorteilhafte Ausgestaltung könnte die Anpassung des Referenzsignals 34 und/ oder des Toleranzbereiches 36 nach jedem Vergleich eines Vergleichssignals 20 mit einem Referenzsignal 34 oder nach 2 bis zu 100 Vergleichen eines Vergleichssignals 20 mit einem Referenzsignal 34 vorsehen.

In Figur 4 ist eine schematische Darstellung des Verfahrens für den Einsatz in einem Lese-/Schreibvorrichtung 2 mit einer Frequenz von 125 kHz des Detektions-und Kommunikationssignals dargestellt.

Zu Beginn eines Detektionszyklusses befindet sich die Lese-/Schreibvorrichtung 2 in einem Stand-by-Modus in dem lediglich die Teile einer Kontrolleinheit 5 aktiv sind, die für die periodische Verbringung der Lese-/Schreibvorrichtung 2 in einen Detektionsmodus benötigt werden.

Die periodische Verbringung in den Detektionsmodus der Lese-/Schreibvorrichtung 2 ist dabei individuell in der Kontrolleinheit 5 einstellbar. Eine vorteilhafte Ausgestaltung der Erfindung sieht einen Wechsel von Stand-by- in den Detektionsmodus alle 250 ms vor.

Im Detektionsmodus generiert die Kontrolleinheit 5 ein Detektionssignal in Form eines einzelnen 2ps Pulses, der mittels eines Timer-Ausgangs 38 der Kontrolleinheit 5 über eine Verstärkereinheit 8 und eine Anpassung 10 an eine Antenne 14 geleitet wird. Der Puls regt die Antenne 14 zum Schwingen an, die daraufhin mit ihrer Resonanzfrequenz anschwingt und langsam wieder ausschwingt.

Das Antennensignal der Antenne 14 wird direkt abgegriffen und einer Demodulationseinheit 18 zugeführt. Die Demodulationseinheit 18 beinhaltet einen Hüllkurvendemodulator, der eine Diode, einen Widerstand und einen Kondensator umfasst. Das Antennensignal der Antenne 14 wird im Demodulator aufsummiert und kurzzeitig gespeichert.

Eine entsprechende Verarbeitung des Antennensignals beginnt erst dann, wenn die Antenne 14 beginnt auszuschwingen.

Das so gewonnene Vergleichssignal wird an einen A/D-Wandler 22 der Kontrolleinheit 5 weitergeleitet, in der das Vergleichssignal mit einem Referenzsignal verglichen wird. Stimmt das Vergleichssignal mit dem Referenzsignal bis auf eine definierbare Toleranzabweichung mit dem Referenzsignal überein, so befindet sich keine Transpondereinheit im elektromagnetischen Feld der Lese-/Schreibvorrichtung 2 und die Kontrolleinheit 5 wird in den Stand-by-Modus verbracht.

Sollte das Vergleichssignal jedoch außerhalb des Toleranzbereiches liegen, so wechselt die Kontrolleinheit 5 in einen Kommunikationsmodus. Im Kommunikati onsmodus wird über die Verstärkereinheit 8 und die Anpassung 10 das Kommunikationssignal, welches über einen Timer-Ausgang 38 der Kontrolleinheit 5 in der Verstärkereinheit 8 modulierbar ist, an die Antenne 14 weitergeleitet, welche wiederum die Antennen der Transpondereinheit empfängt und über einen Filter 26 an eine Empfängereinheit 40 leitet. Während der Kommunikation zwischen Kontrolleinheit 5 und Transpondereinheit werden, im für die Kommunikation benötigten Ausmaß, Daten von der Empfängereinheit 40 an die Kontrolleinheit 5 weitergeleitet.

Nach einer abgeschlossenen Kommunikation wird die Kontrolleinheit 5 wieder in den Stand-by-Modus verbracht, aus dem sie erneut periodisch in den Detektionsmodus verbracht wird.

In Figur 5 ist ein typischer zeitlicher Verlauf des Antennensignals 29 dargestellt. Aufgrund des ausgesandten Detektionssignals in Form eines 2 µs Impulses wird die Antenne zu Schwingungen angeregt und schwingt nach Abschalten des De- tektionssignals langsam aus. Die Antennenschwingung 31 wird über einen Widerstand an den Hüllkurvendemodulator weitergeleitet.

Befindet sich eine Transpondereinheit im elektromagnetischen Feld der Lese-/Schreibvorrichtung (Fig. 5b), so wird die Antenne bedämpft und die Amplitude der Antennenschwingungen 31 erreicht nicht die Werte wie im ungedämpften Fall, wenn sich keine Transpondereinheit im elektromagnetischen Feld der Lese-/Schreibvorrichtung befindet (Fig. 5a).

Die Folge davon ist, dass die energetische Ladung des Kondensators des Hüllkurvendemodulators und das daraus gewonnene Vergleichssignal 40 geringer (Fig. 5b) ist, als für den Fall, dass sich keine Transpondereinheit im elektromagnetischen Feld der Lese-/Schreibvorrichtung befindet und somit das Vergleichssignal 40 bis auf eine Toleranzabweichung dem Referenzsignal 38 entspricht (Fig. 5a).

In Figur 6 ist eine typische Spannungskennlinie 36 eines Kondensators in einem Hüllkurvendemodulator dargestellt. Mit dem Beginn der Antennenschwingungen steigt die Spannung des Kondensators am Hüllkurvendemodulator stetig an, bis sie ein Maximum erreicht, wenn das Detektionssignal entweder abgeschaltet wird oder die abfallenden Schwingungen keinen Beitrag mehr leisten.

Bei den beiden Spannungskennlinien 36 handelt es sich zum einen um ein Referenzsignal 38 und zum andern um ein Vergleichssignal 40. Zudem ist der frei wählbare Toleranzbereich 42 dargestellt und die Tatsache, dass die Abweichung des Vergleichssignals 40 außerhalb des Toleranzbereichs 42 des Referenzsignals 38 liegt und somit der Vergleich der Signale zu einer Verbringung der Kontrolleinheit in den Kommunikationsmodus führt.

Zudem ist es möglich, dass sich das Referenzsignal 38 und der Toleranzbereich 42 automatisch und/oder manuell anpassen lassen. Die Anpassung ist dabei abhängig von den Umgebungsparametern der Lese-/Schreibvorrichtung und/oder der Anzahl erfolgreicher und nicht erfolgreicher Kommunikationen mit einer Transpondereinheit.

Eine vorteilhafte Ausgestaltung könnte die Anpassung des Referenzsignals 38 und/oder des Toleranzbereiches 42 nach jedem Vergleich eines Vergleichssignals 40 mit einem Referenzsignal 38 oder nach bis zu 100 Vergleichen eines Vergleichssignals 40 mit einem Referenzsignal 38 vorsehen.

In Figur 7 ist eine schematische Darstellung des Verfahrens für den Einsatz in einer Lese-/Schreibvorrichtung 4 mit Frequenz von 125 kHz und 13,56 MHz des Detektions- und Kommunikationssignals dargestellt. Dabei ist es unerheblich, ob zunächst das Detektionssignal mit einer Frequenz von 125 kHz ausgesandt wird und anschließend das mit einer Frequenz von 13,56 MHz oder umgekehrt.

Zu Beginn eines Detektionszyklusses befindet sich die Lese-/Schreibvorrichtung 4 in einem Stand-by-Modus in dem lediglich die Teile einer Kontrolleinheit 5 aktiv sind, die für die periodische Verbringung der Lese-/Schreibvorrichtung 4 in einen Detektionsmodus benötigt werden.

Die periodische Verbringung in den Detektionsmodus der Lese-/Schreibvorrichtung 4 ist dabei individuell in der Kontrolleinheit 5 einstellbar. Eine vorteilhafte Ausgestaltung der Erfindung sieht einen Wechsel von Stand-by- in den Detektionsmodus alle 250 ms vor.

Im Detektionsmodus generiert die Kontrolleinheit 5 ein Detektionssignal in Form eines einzelnen 2 µs Pulses, der mittels eines Timer-Ausgangs 32 der Kontrolleinheit 5 über eine Verstärkereinheit 9 und eine Anpassung 11 an eine Antenne 15 geleitet wird. Der Puls regt die Antenne 15 zum Schwingen an, die daraufhin anschwingt und mit ihrer Resonanzfrequenz langsam wieder ausschwingt.

Das Antennensignal der Antenne 15 wird direkt abgegriffen und über einen Widerstand 17 einer Demodulationseinheit 18 zugeführt. Die Demodulationseinheit 18 beinhaltet einen Hüllkurvendemodulator, der eine Diode, einen Kondensator und einen parallel zum Kondensator liegenden Widerstand umfasst. Das Antennensignal der Antenne 15 wird im Hüllkurvendemodulator aufsummiert und kurzzeitig gespeichert.

Eine entsprechende Verarbeitung des gespeicherten Wertes beginnt erst dann, wenn das Detektionssignal bereits wieder abgeschaltet wurde. Somit wird das benötigte Energieniveau stets niedrig gehalten.

Das so gewonnene Vergleichssignal wird an einen A/D-Wandler 20 der Kontrolleinheit 5 weitergeleitet, in der das Vergleichssignal mit einem Referenzsignal verglichen wird. Sollte das Vergleichssignal außerhalb eines frei definierbaren Toleranzbereiches liegen, so wechselt die Kontrolleinheit 5 in einen Kommunikationsmodus. Im Kommunikationsmodus wird über die Verstärkereinheit 9 und die Anpassung 11 das Kommunikationssignal, welches über einen Timer-Ausgang 33 der Kontrolleinheit 5 in der Verstärkereinheit 9 modulierbar ist, an die Antenne 15 weitergeleitet, welche wiederum die Signale der Transpondereinheit empfängt und über einen Filter 25 an eine Empfängereinheit 34 leitet. Während der Kommunikation zwischen Kontrolleinheit 5 und Transpondereinheit werden, im für die Kommunikation benötigten Ausmaß, Daten von der Empfängereinheit 34 an die Kontrolleinheit 5 weitergeleitet.

Nach einer abgeschlossenen Kommunikation wird die Kontrolleinheit 5 wieder in den Stand-by-Modus verbracht, aus dem sie erneut periodisch in den Detektionsmodus verbracht wird.

Stimmt das Vergleichssignal bis auf eine definierbare Toleranzabweichung mit dem Referenzsignal überein, so befindet sich keine Transpondereinheit, die auf der 125 kHz Frequenz sendet, im elektromagnetischen Feld der Lese-/Schreibvorrichtung 4 und die Kontrolleinheit 5 schaltet zunächst einen Oszillator 6 und verzögert einen Verstärker 8 ein und leitet ein Detektionssignal mit einer Frequenz von 13,56 MHz über eine Anpassung 10 an eine Antenne 14.

Das Antennensignal der Antenne 14 wird direkt abgegriffen und über einen Widerstand 16 einer Demodulationseinheit 18 zugeführt. Die Demodulationseinheit 18 beinhaltet einen Hüllkurvendemodulator, der eine Diode, einen Kondensator und einen parallel zum Kondensator liegenden Widerstand umfasst. Das Antennensignal der Antenne 14 wird im Hüllkurvendemodulator aufsummiert und der Wert kurzzeitig gespeichert.

Eine entsprechende Verarbeitung des gespeicherten Wertes beginnt erst dann, wenn das Detektionssignal bereits wieder abgeschaltet wurde. Dadurch wird das benötigte Energieniveau stets niedrig gehalten.

Das so gewonnene Vergleichssignal wird an einen AVD-Wandler 20 der Kontrolleinheit 5 weitergeleitet, in der das Vergleichssignal mit einem Referenzsignal verglichen wird. Stimmt das Vergleichssignal bis auf eine definierbare Toleranzabweichung mit dem Referenzsignal überein, so befindet sich keine Transpondereinheit im elektromagnetischen Feld der Lese-/Schreibvorrichtung 2 und die Kontrolleinheit 5 wird in den Stand-by-Modus verbracht.

Sollte das Vergleichssignal jedoch außerhalb des Toleranzbereiches liegen, so wechselt die Kontrolleinheit 5 in einen Kommunikationsmodus, indem eine Transceivereinheit 22 eingeschaltet wird. Die Transceivereinheit 22 sendet daraufhin das Kommunikationssignal über eine Anpassung 12 an die Antenne 14, welche wiederum die Antwort der Transpondereinheit empfängt und über einen Filter 24 an die Transceivereinheit 22 leitet. Während der Kommunikation zwischen Kontrolleinheit 5 und Transpondereinheit werden, im für die Kommunikation benötigten Ausmaß, Daten zwischen Kontrolleinheit 5 und Transceivereinheit 22 ausgetauscht.

Nach einer abgeschlossenen Kommunikation wird die Transceivereinheit 22 abgeschaltet und die Kontrolleinheit 5 wieder in den Stand-by-Modus verbracht, aus dem sie erneut periodisch in den Detektionsmodus verbracht wird.

### Bezugszeichenliste

### (ist Teil der Beschreibung)

2 Lese-/Schreibvorrichtung 40 Empfängereinheit 5 Kontrolleinheit 6 Oszillator 8 Verstärker 10 Anpassung 12 Detektionssignal 14 Antenne 16 Antennensignal der Antenne 18 Demodulationseinheit 20 Vergleichssignal 22 A/D-Wandler 24 Transceivereinheit 26 Filter 28 Antennenschwingung 30 Burst 32 Spannungskennlinie 34 Referenzsignal 36 Toleranzbereich 38 Timer-Ausgang

## Patentansprüche

1. Verfahren zur Präsenzbestimmung einer Transpondereinheit in einem elektromagnetischen Feld einer Lese-/Schreibvorrichtung (2, 4), umfassend die folgenden Verfahrensschritte durch die Lese-/Schreibvorrichtung:
• Verbringen einer Kontrolleinheit (5) aus einem Stand-by-Modus in einen Detektionsmodus
• Aussenden eines Detektionssignals
• Abgreifen eines Antwortsignals
• Weiterleiten des Antwortsignals an eine Demodulationseinheit (18)
• Ermitteln eines Vergleichssignals
• Weiterleiten des Vergleichssignals an die Kontrolleinheit (5)
• Vergleichen des Vergleichssignals mit einem Referenzsignal
• Aussenden eines Kommunikationssignals, falls das Vergleichssignal um einen vorbestimmbaren Wert vom Referenzsignal abweicht, sonst Rückkehr in den Stand-by-Modus
**dadurch gekennzeichnet, dass** sich zu Beginn eines Detektionszyklusses die Lese-/Schreibvorrichtung (2, 4) in einem Stand-by-Modus befindet, in dem lediglich die Teile der Kontrolleinheit (5) aktiv sind, die für eine periodische Verbringung der Lese-/Schreibvorrichtung (2, 4) in den Detektionsmodus benötigt werden, dass als Detektionssignal ein Burst (26) aus mehreren Schwingungen mittels eines externen Oszillator (6) erzeugt wird, der ausschließlich zur Erzeugung des Burst (26) eingesetzt wird, und der Burst (26) zur Antenne (14) geleitet wird, dass als Antwortsignal eine an der Antenne (14) der Lese/Schreibvorrichtung (2, 4) abgegriffene Spannung als Antennensignal (28) der Demodulationseinheit (18) zugeführt und mittels dieser gleichgerichtet und über mehrere Schwingungen (30) analog aufsummiert und zwischengespeichert wird und dass erst nach Abschalten des externen Oszillator (6) und damit des Detektionssignals die Lese-/ Schreibvorrichtung in den Detektionsmodus geschaltet wird und der zwischengespeicherte Wert als Vergleichssignal (40) an die Kontrolleinheit (5) weitergeleitet wird und dort mit dem Referenzsignal (38) verglichen wird.

2. Verfahren zur Präsenzbestimmung einer Transpondereinheit in einem elektromagnetischen Feld einer Lese-/Schreibvorrichtung (3, 4), umfassend die folgenden Verfahrensschritte durch die Lese-/Schreibvorrichtung:
• Verbringen einer Kontrolleinheit (5) aus einem Stand-by-Modus in einen Detektionsmodus
• Aussenden eines Detektionssignals
• Abgreifen eines Antwortsignals
• Weiterleiten des Antwortsignals an eine Demodulationseinheit (18)
• Ermitteln eines Vergleichssignals
• Weiterleiten des Vergleichssignals an die Kontrolleinheit (5)
• Vergleichen des Vergleichssignals mit einem Referenzsignal
• Aussenden eines Kommunikationssignals, falls das Vergleichssignal um einen vorbestimmbaren Wert vom Referenzsignal abweicht, sonst Rückkehr in den Stand-by-Modus
**dadurch gekennzeichnet, dass** sich zu Beginn eines Detektionszyklusses die Lese-/Schreibvorrichtung (3, 4) in einem Stand-by-Modus befindet, in dem lediglich die Teile der Kontrolleinheit (5) aktiv sind, die für eine periodische Verbringung der Lese-/Schreibvorrichtung (3, 4) in den Detektionsmodus benötigt werden, dass als Detektionssignal ein einzelner Puls (27) mittels der Kontrolleinheit (5) erzeugt wird, der über einen Timer-Ausgang (32) der Kontrolleinheit (5) zur Antenne (15) geleitet wird, dass als Antwortsignal eine an der Antenne (15) der Lese/Schreibvorrichtung (3, 4) abgegriffene Spannung als Antennensignal (29) der Demodulationseinheit (18) zugeführt und mittels dieser gleichgerichtet und über mehrere Schwingungen (31) analog aufsummiert und zwischengespeichert wird und dass erst nach Abschalten des Detektionssignals die Lese-/ Schreibvorrichtung in den Detektionsmodus geschaltet wird und der zwischengespeicherte Wert als Vergleichssignal (40) an die Kontrolleinheit (5) weitergeleitet wird und dort mit dem Referenzsignal (38) verglichen wird.

3. Verfahren nach Anspruch 1 oder 2, **dadurch gekennzeichnet, dass** das Verbringen der Kontrolleinheit (5) von dem Stand-by-Modus in den Detektionsmodus periodisch wiederholt wird, wobei die Periode einstellbar ist.

4. Verfahren nach einem der Ansprüche 1 - 3, **dadurch gekennzeichnet, dass** ausgehend vom letzten Vergleichssignal (40), welches der Kontrolleinheit (5) übermittelt wurde, das Referenzsignal (34) automatisch neu kalibriert wird.

5. Verfahren nach einem der Ansprüche 1 - 4, **dadurch gekennzeichnet, dass** die Kontrolleinheit (5) nach der Kommunikation mit der Transpondereinheit in den Stand-by-Modus verbracht wird.

6. Verfahren nach einem der Ansprüche 1 - 5, **dadurch gekennzeichnet, dass** das Detektionssignal mit einer geringeren Leistung gesendet wird, als das Kommunikationssignal.

7. Verfahren nach einem der Ansprüche 1 - 6, **dadurch gekennzeichnet, dass** zur Aussendung des Detektionssignals ein hochohmiger Verstärker (8) eingesetzt wird.

8. Verfahren nach einem der Ansprüche 1 und 3 - 7, **dadurch gekennzeichnet, dass** zu Beginn des Detektionsmodus der externe Oszillator (6) eingeschaltet wird, unmittelbar nach Einschalten des externen Oszillators (6) und für einen Zeitraum, der gleich dem Zeitraum zum Einschwingen und Erreichen eines stationären Zustand der Schwingungsamplitude ist, die Lese-/Schreibvorrichtung (2, 4) vorübergehend in den Stand-By-Modus versetzt wird und nach Ablauf dieses Zeitraums die Lese-/Schreibvorrichtung (2, 4) wieder in den Detektionsmodus versetzt wird, anschließend der Verstärker aktiviert und die Oszillatorschwingung für die Dauer des Burst (26) auf die Antenne (14) geschaltet und danach wieder von der Antenne (14) getrennt wird und der Verstärker (8) und der Oszillator (6) ausgeschaltet werden und unmittelbar danach der Wert des Vergleichssignals verarbeitet wird.

9. Lese-/Schreibvorrichtung (2, 3. 5) zur Durchführung des Verfahrens nach einem der Ansprüche 1 - 8, **dadurch gekennzeichnet, dass** die Demodulationseinheit (18) aus einer Diode, einem Widerstand und einem Kondensator besteht, wobei der Kondensator ein Zwischenspeicher ist.

## Claims

1. A method for determining the presence of a transponder unit in an electromagnetic field of a reading/writing device (2, 4), comprising the following method steps by the reading/writing device:
• bringing a control unit (5) out of a standby mode into a detection mode
• emitting a detection signal
• tapping a response signal
• forwarding the response signal to a demodulation unit (18)
• identifying a comparative signal
• forwarding the comparative signal to the control unit (5)
• comparing the comparative signal to a reference signal
• emitting a communication signal, if the comparative signal differs from the reference signal by a predeterminable value, otherwise returning to the standby mode
**characterised in that,** at the beginning of a detection cycle, the reading/writing device (2, 4) is in a standby mode, in which only the parts of the control unit (5) which are required in order to periodically bring the reading/writing device (2, 4) into the detection mode are active, that a burst (26) made up of a plurality of vibrations is generated as a detection signal by means of an external oscillator (6), which is employed exclusively to generate the burst (26), and the burst (26) is directed to the antenna (14), that, as a response signal, a voltage tapped at the antenna (14) of the reading/writing device (2, 4) is supplied as an antenna signal (28) to the demodulation unit (18) and, by means of this, is rectified and analogously added up and buffered via a plurality of vibrations (30), and that only after the external oscillator (6), and thus the detection signal, is switched off is the reading/writing device switched into the detection mode and the buffered value is forwarded onto the control unit (5) as a comparative signal (40) and, there, is compared to the reference signal (38).

2. A method for determining the presence of a transponder unit in an electromagnetic field of a reading/writing device (3, 4), comprising the following method steps by the reading/writing device:
• bringing a control unit (5) out of a standby mode into a detection mode
• emitting a detection signal
• tapping a response signal
• forwarding the response signal to a demodulation unit (18)
• identifying a comparative signal
• forwarding the comparative signal to the control unit (5)
• comparing the comparative signal to a reference signal
• emitting a communication signal, if the comparative signal differs from the reference signal by a predeterminable value, otherwise returning to the standby mode
**characterised in that,** at the beginning of a detection cycle, the reading/writing device (3, 4) is in a standby mode, in which only the parts of the control unit (5) which are required in order to periodically bring the reading/writing device (3, 4) into the detection mode are active, that a single pulse (27) is generated as a detection signal by means of the control unit (5), which is directed to the antenna (15) via a timer output (32) of the control unit (5), that, as a response signal, a voltage tapped at the antenna (15) of the reading/writing device (3, 4) is supplied as an antenna signal (29) to the demodulation unit (18) and, by means of this, is rectified and analogously added up and buffered via a plurality of vibrations (31), and that only after the detection signal is switched off is the reading/writing device switched into the detection mode and the buffered value is forwarded onto the control unit (5) as a comparative signal (40) and, there, is compared to the reference signal (38).

3. The method according to Claim 1 or 2, **characterised in that** the bringing of the control unit (5) from the standby mode into the detection mode is periodically repeated, wherein the period can be adjusted.

4. The method according to any one of Claims 1 - 3, **characterised in that,** starting from the last comparison signal (40) which has been transmitted to the control unit (5), the reference signal (34) is automatically recalibrated.

5. The method according to any one of Claims 1 - 4, **characterised in that** the control unit (5) is brought into the standby mode after the communication with the transponder unit.

6. The method according to any one of Claims 1 - 5, **characterised in that** the detection signal is transmitted at a lower power than the communication signal.

7. The method according to any one of Claims 1 - 6, **characterised in that** a high-impedance amplifier (8) is employed to emit the detection signal.

8. The method according to any one of Claims 1 and 3 - 7, **characterised in that,** at the beginning of the detection mode, the external oscillator (6) is switched on, immediately after the external oscillator (6) is switched on and for a period of time which is equal to the period of time for transient oscillation and reaching a stationary state of the vibration amplitude, the reading/writing device (2, 4) is temporarily put into the standby mode and, after this period of time has expired, the reading/writing device (2, 4) is again put into the detection mode, then the amplifier is activated and the oscillator vibration is switched to the antenna (14) for the duration of the burst (26), and thereafter is separated from the antenna (14) again, and the amplifier (8) and the oscillator (6) are switched off and immediately thereafter the value of the comparative signal is processed.

9. A reading/writing device (2, 3, 5) to carry out the method according to any one of Claims 1 - 8, **characterised in that** the demodulation unit (18) consists of a diode, a resistor and a capacitator, wherein the capacitator is a buffer.

## Revendications

1. Procédé de détermination de la présence d'une unité de transpondeur dans un champ électromagnétique d'un dispositif de lecture/écriture (2, 4), comprenant les étapes de procédé suivantes exécutées par le dispositif de lecture/écriture, les étapes consistant à :
- Passer une unité de contrôle (5) d'un mode veille en un mode détection
- Emettre un signal de détection
- Prélever un signal de réponse
- Transmettre le signal de réponse à une unité de démodulation (18)
- Déterminer un signal de comparaison
- Transmettre le signal de comparaison avec un signal de référence
- Emettre un signal de communication si le signal de comparaison s'écarte d'une valeur pouvant être prédéterminée du signal de référence, sinon retour en mode veille
**caractérisé en ce qu**'au début d'un cycle de détection le dispositif de lecture/écriture (2, 4) est en un mode veille, dans lequel sont actives uniquement les parties de l'unité de contrôle (5) qui sont nécessaires pour passer le dispositif de lecture/écriture (2, 4) périodiquement en mode détection, en ce que, comme signal de détection, une rafale (26) de plusieurs oscillations est produite au moyen d'un oscillateur externe (6), qui est utilisé exclusivement pour produire la rafale (26) et la rafale (26) est dirigée à l'antenne (14), en ce que, comme signal de réponse, une tension prélevée à l'antenne (14) du dispositif de lecture/écriture (2, 4) est amenée comme signal d'antenne (28) à l'unité de démodulation (18), au moyen de laquelle elle est redressée et cumulée analogiquement sur plusieurs oscillations (30) et mise en mémoire tampon et, en ce que c'est seulement après la désactivation de l'oscillateur externe (6) et, par conséquent, du signal de détection, que le dispositif de lecture/écriture est passé en mode détection et la valeur mise en mémoire tampon transmise comme signal de comparaison (40) à l'unité de contrôle (5), où elle est comparée au signal de référence (38).

2. Procédé de détermination de la présence d'une unité de transpondeur dans un champ électromagnétique d'un dispositif de lecture/écriture (2, 4), comprenant les étapes de procédé suivantes exécutées par le dispositif de lecture/écriture, les étapes consistant à :
- Passer une unité de contrôle (5) d'un mode veille en un mode détection
- Emettre un signal de détection
- Prélever un signal de réponse
- Transmettre le signal de réponse à une unité de démodulation (18)
- Déterminer un signal de comparaison
- Transmettre le signal de comparaison à l'unité de contrôle (5)
- Comparer le signal de comparaison avec un signal de référence
- Emettre un signal de communication si le signal de comparaison s'écarte d'une valeur pouvant être prédéterminée du signal de référence, sinon retour en mode veille,
**caractérisé en ce qu'**au début d'un cycle de détection, le dispositif de lecture/écriture (3, 4) est en un mode veille, dans lequel sont actives uniquement les parties de l'unité de contrôle (5), qui sont nécessaires pour passer périodiquement le dispositif de lecture/écriture (3, 4) en mode détection, **en ce que**, comme signal de détection, une seule impulsion (27) est produite au moyen de l'unité de contrôle (5), impulsion qui est dirigée via une sortie de timer (32) de l'unité de contrôle (5) vers l'antenne (15), **en ce que**, comme signal de réponse, une tension prélevée à l'antenne (15) du dispositif de lecture/écriture est amenée comme signal d'antenne (29) à l'unité de démodulation (18), au moyen de laquelle elle est redressée et cumulée analogiquement sur plusieurs oscillations (30) et mise en mémoire tampon et **en ce que** c'est seulement après la désactivation du signal de détection, que le dispositif de lecture/écriture est passé en mode détection et la valeur mise en mémoire tampon transmise comme signal de comparaison (40) à l'unité de contrôle (5), où elle est comparée au signal de référence (38).

3. Procédé suivant la revendication 1 ou 2, **caractérisé en ce que** le passage de l'unité de contrôle (5) du mode veille au mode détection est répété périodiquement, l'intervalle périodique étant réglable.

4. Procédé suivant la revendication 1 à 3, **caractérisé en ce que** le signal de référence (34) est automatiquement recalibré à partir du dernier signal de comparaison (40) transmis à l'unité de contrôle (5).

5. Procédé suivant une des revendications 1 à 3, **caractérisé en ce que** l'unité de contrôle (5) est passée en mode veille après la communication avec l'unité de transpondeur.

6. Procédé suivant une des revendications 1 à 5, **caractérisé en ce que** le signal de détection est envoyé avec une puissance plus faible que le signal de communication.

7. Procédé suivant une des revendications 1 à 6, **caractérisé en ce qu**'un amplificateur à haute impédance (8) est utilisé pour émettre le signal de détection.

8. Procédé suivant une des revendications 1 et 3 à 7, **caractérisé en ce que** l'oscillateur externe (6) est activé au début du mode détection, **en ce que** le dispositif de lecture/écriture (2, 4) est provisoirement passé en mode veille immédiatement après l'activation de l'oscillateur externe (6) et pour une période qui est égale à la période de stabilisation et d'obtention d'un état stationnaire de l'amplitude des oscillations et **en ce qu'**à l'expiration de cette période, le dispositif de lecture/écriture (2, 4) est à nouveau passé en mode détection, puis l'amplificateur est activé et les oscillations de l'oscillateur sont appliquées à l'antenne (14) pendant la durée de la rafale (26), puis séparées de l'antenne (14), et l'amplificateur (8) et l'oscillateur (6) sont désactivés et la valeur du signal de comparaison est traitée immédiatement après.

9. Dispositif de lecture/écriture (2, 3. 5) destiné à l'exécution du procédé suivant une des revendications 1 à 8, **caractérisé en ce que** l'unité de démodulation (18) est constituée par une diode, une résistance et un condensateur, le condensateur étant une mémoire à tampon.
